(19) Europäisches Patentamt European Patent Office Office européen des brevets

(11) **EP 4 382 395 B1**

(12) **EUROPEAN PATENT SPECIFICATION**

(45) Date of publication and mention of the grant of the patent:
**20.08.2025 Bulletin 2025/34**

(21) Application number: **21956338.4**

(22) Date of filing: **08.09.2021**

(51) International Patent Classification (IPC):
**B62D 5/04** *(2006.01)*     **F16H 7/14** *(2006.01)*
**F16H 7/02** *(2006.01)*     **F16H 7/12** *(2006.01)*

(52) Cooperative Patent Classification (CPC):
**B62D 5/0424; F16H 7/02; F16H 7/10; F16H 7/1281; F16H 7/14; B62D 5/0445; F16H 2007/0865; F16H 2007/088; F16H 2007/0893**

(86) International application number:
**PCT/CN2021/117231**

(87) International publication number:
**WO 2023/035150 (16.03.2023 Gazette 2023/11)**

(54) **TRANSMISSION APPARATUS, METHOD FOR ADJUSTING TRANSMISSION APPARATUS AND VEHICLE**

GETRIEBEVORRICHTUNG, VERFAHREN ZUR EINSTELLUNG DER GETRIEBEVORRICHTUNG UND FAHRZEUG

APPAREIL DE TRANSMISSION, PROCÉDÉ DE RÉGLAGE D'APPAREIL DE TRANSMISSION ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.06.2024 Bulletin 2024/24**

(73) Proprietor: **Shenzhen Yinwang Intelligent Technologies Co., Ltd.**
**Shenzhen, Guangdong 518129 (CN)**

(72) Inventor: **LI, Shenghui**
**Shenzhen, Guangdong 518129 (CN)**

(74) Representative: **Pfenning, Meinig & Partner mbB Patent- und Rechtsanwälte**
**Theresienhöhe 11a**
**80339 München (DE)**

(56) References cited:
EP-A1- 1 792 804      CN-A- 104 455 258
CN-A- 107 010 101      CN-A- 110 155 158
CN-U- 202 992 067      CN-U- 210 240 463
JP-A- 2005 029 145      JP-A- 2005 343 434
JP-A- 2012 111 418      KR-A- 20160 149 704

**Description**

**TECHNICAL FIELD**

This application relates to the field of vehicle technologies, and in particular, to a transmission apparatus, a transmission apparatus adjustment method, and a vehicle.

**BACKGROUND**

A power steering system is a system that assists a driver in adjusting a vehicle direction, and can reduce a force required by the driver to operate a steering wheel. There are many types of power systems, among which REPS (Rack parallel electronic power steering system, rack-assisted electric power steering gear) has been widely used in medium and high-end vehicle models in recent years due to its large power range and good noise characteristics.

A working principle of the REPS is as follows: When the driver operates the steering wheel, the steering wheel drives a steering shaft to rotate. The steering shaft and a steering rod are connected through a gear and a rack engaged with each other. The steering shaft rotates to drive the steering rod to move leftward or rightward, to drive a wheel to turn leftward or rightward. A torque angle sensor can collect steering information transferred by the steering wheel and transfer the steering information to a controller. Alternatively, an autonomous driving center sends steering response requirement information, and transfers the steering response requirement information to a controller. After receiving the information, the controller performs calculation and processing, and then sends motor current control information, so that a motor outputs a corresponding torque and rotational speed/angle. The motor uses a transmission belt to connect a drive pulley on an output shaft of the motor and a driven pulley on the steering rod. The driven pulley and the steering rod form a screw transmission structure, decelerating and increasing a torque through the transmission belt. The driven pulley converts a rotational torque into an axial force of the steering rod, to implement vehicle steering.

In the REPS, belt transmission has advantages of stable transmission, low noise, and a high transmission ratio, but because the transmission belt is made of rubber and additives, the belt has specific elasticity. Excessively tight assembly may cause an excessively large friction force and serious wear. Excessively loose assembly is likely to produce noise and cause slipping. Therefore, tension of the transmission belt needs to be adjusted to an appropriate range.

EP 1 792 804 A1 discloses a motor-driven steering system capable of easily adjusting tension. The motor-driven steering system comprises a driven pulley connected to a driving pulley of the motor through a belt, a gear housing for surrounding the driven pulley, a motor housing rotatably connected to the gear housing by means of a hinge shaft, and a guide formed at one side portion of the gear housing. The distance between the driving pulley and the driven pulley is adjusted by rotating the motor housing relative to the gear housing.

**SUMMARY**

This application provides a transmission apparatus, to adjust tension of a transmission belt, so that wear on the transmission belt caused by excessively large tension can be avoided, or noise and slipping caused by excessively small tension can be avoided.

A first aspect of this application provides a transmission apparatus disclosing the features of claim 1.

The tension pulley disposed on the adjustment pin abuts against the transmission belt, so that when the drive pulley rotates around the adjustment pin as a center for adjustment, a position between the tension pulley and the drive pulley may be changed. This can change a path through which the transmission belt passes when connecting the drive pulley and the driven pulley, to change a length of the transmission belt and adjust the tension of the transmission belt.

In a third possible implementation of the first aspect, the outer circumferential surface of the tension pulley abuts against an outer circumferential surface of the transmission belt. In this case, the path through which the transmission belt passes when connecting the drive pulley and the driven pulley may be changed by using the tension pulley, so that a distance between the transmission belt located on two sides of a part between the drive pulley and the driven pulley is shorter, and both a radian and a corresponding belt contact angle of contact between the transmission belt and both the drive pulley and the driven pulley are larger. This increases a contact area between the transmission belt and both the drive pulley and the driven pulley, improves a maximum static friction force between the transmission belt and both the drive pulley and the driven pulley, reduces a possibility of slipping between the transmission belt and both the drive pulley and the driven pulley, and reduces wear of the transmission belt. In addition, the motor rotates relative to the housing, and the drive pulley is adjusted away from/towards the driven pulley. In this case, when the transmission belt is extended/shortened, the tension pulley correspondingly moves towards/far away from a connection line between a center of the drive pulley and a center of the driven pulley, so that the tension pulley can tighten/loosen the transmission belt. This can increase an adjustment range of the tension of the transmission belt, reduce an angle at which the motor needs to rotate when the tension of the transmission belt is adjusted, and reduce space required for adjusting positions of the motor and the drive pulley.

In a fourth possible implementation of the first aspect, the axis of the drive pulley, an axis of the driven pulley, and the axis of the adjustment pin are in parallel, and a relative position between the axis of the driven pulley and the axis of the adjustment pin remains unchanged. This can ensure that when the drive pulley rotates around the adjustment pin, the transmission belt is normally connected to both the drive pulley and the driven pulley, and belt transmission is normally performed regardless of misalignment between the drive pulley and the driven pulley.

In a fifth possible implementation of the first aspect, the transmission apparatus further includes a first motor and a housing. The first motor is configured to drive the drive pulley, and the first motor is mounted on the housing by using the adjustment pin. Therefore, the first motor is mounted on the housing by using the adjustment pin. When the first motor is mounted, the first motor may be positioned by using the adjustment pin, so that the first motor is fastened to the housing. The adjustment pin can further improve connection strength between the first motor and the housing. When the first motor and the housing are fastened by a bolt, if most bolts fail due to fracture or detachment caused by vibration or the like, even if only one bolt is connected between the first motor and the housing, the adjustment pin may fasten the first motor, to prevent the first motor from rotating around the only one bolt.

In a sixth possible implementation of the first aspect, the first motor further includes a first chamber, and the adjustment pin further includes a through hole. A first end of the through hole is located in the first chamber, a second end of the through hole is located outside the first motor, and the first chamber is connected to an outside of the first motor through the through hole. Therefore, when the first motor rotates, air in the first chamber may enter and exit the first chamber through the through hole, to reduce air pressure fluctuation in the first chamber when the first motor rotates and reduce noise generated when the first motor rotates. The first chamber is connected to the outside of the first motor through the through hole, so that air heated in the first chamber due to operation of the first motor can be exchanged with air outside the first motor through the through hole, improving heat dissipation efficiency of the first motor.

In a seventh possible implementation of the first aspect, the housing is enclosed to form a second chamber, and the drive pulley, the driven pulley, and the adjustment pin are accommodated in the second chamber. That the first chamber is connected to an outside of the first motor through the through hole specifically includes: The first chamber is connected to the second chamber through the through hole. In this case, the first chamber and the second chamber can be connected through the through hole, so that air tightness detection can be simultaneously performed in the first chamber and the second chamber. This can simplify production steps, accelerate a production speed and improve production efficiency.

In an eighth possible implementation of the first aspect, an axis of the through hole coincides with the axis of the adjustment pin. This can simplifier processing of the through hole, and improve production efficiency. The adjustment pin can be directly processed and manufactured by using a pipe material, so that a drilling operation is not required during production. This simplifies a production procedure and improves production efficiency.

In a ninth possible implementation of the first aspect, the adjustment pin further includes a positioning end face, and the positioning end face is configured to abut against the housing. In this case, the positioning end face abuts against the housing, so that positioning can be implemented when the adjustment pin is mounted on the housing, to facilitate mounting of the adjustment pin.

In a tenth possible implementation of the first aspect, the adjustment pin is fixedly connected to the housing. In this case, stability of fitting between the adjustment pin and the housing can be implemented without increasing a thickness of the housing. This can reduce the thickness of the housing, save a material, and reduce a weight of the housing. In addition, after the first motor is mounted on the housing, the drive shaft needs to pass through the housing before the drive pulley is mounted. Reducing the thickness of the housing may correspondingly reduce a length of the drive shaft, so that a length of the drive shaft exposed from the first motor is shorter. Therefore, rigidity and durability of the drive shaft are improved, and transmission of the drive shaft is more stable.

In an eleventh possible implementation of the first aspect, the first motor further includes a first fastening part, and the first motor is fixedly connected to the housing by using the first fastening part. In this case, the first motor can be conveniently fastened to the housing by using the first fastening part.

In a twelfth possible implementation of the first aspect, that the first motor further includes a first fastening part specifically includes: The motor includes at least one bolt hole; and the first motor is relatively fastened to the housing through a bolt connection. In this case, a fixed connection may be implemented by using a bolt, to facilitate mounting and removal.

In a thirteenth possible implementation of the first aspect, the transmission apparatus further includes a second motor, and the second motor and the first motor jointly drive the drive pulley. This can increase a driving force, and the first motor and the second motor may be mutually redundant, improving stability of the transmission apparatus.

A second aspect of this application provides a transmission apparatus including the adjustment pin as defined in claim 1, where a motor is hinged to a housing by using the adjustment pin, and the adjustment pin is staggered with a drive shaft of the motor. A drive pulley is disposed on the drive shaft. A driven pulley is disposed at a position corresponding to the drive pulley on the housing. The drive pulley is connected to the driven pulley by using a transmission belt. After a motor rotates relative to the housing to adjust tension of the transmission belt, the motor is fixedly connected to the housing. In this case, the motor is hinged to the housing by using the adjustment pin, so that the motor can rotate relative to the housing. The adjustment pin is staggered with the drive shaft of the motor. Therefore, when the motor rotates relative to the housing, the drive shaft may rotate by using the adjustment pin as an axle, so that the drive pulley rotates by using the adjustment pin as an axle. The driven pulley is disposed on the housing. Therefore, when the motor rotates relative to the housing, a distance between the drive pulley and the driven pulley may be adjusted, and a magnitude of tension of the transmission belt between the drive pulley and the driven pulley may be adjusted. In addition, the motor is hinged to the housing by using the adjustment pin. Therefore, when the motor is mounted on the housing, the motor may be positioned by using the adjustment pin, so that the motor is fastened to the housing. The adjustment pin can further improve connection strength between the motor and the housing. When the motor and the housing are fastened by a bolt, if most bolts fail due to fracture or detachment caused by vibration or the like, even if only one bolt is connected between the motor and the housing, the adjustment pin may fasten the motor, to prevent the motor from rotating around the only one bolt.

The tension pulley is further included. The tension pulley is disposed on the adjustment pin, and the tension pulley is configured to abut against the transmission belt. In this case, the tension pulley disposed on the adjustment pin abuts against the transmission belt, so that when the motor rotates around the adjustment pin as a center for adjustment, a position between the tension pulley and the drive pulley may be changed. This can change a path through which the transmission belt passes when connecting the drive pulley and the driven pulley, to change a length of the transmission belt and adjust the tension of the transmission belt.

In a third possible implementation of the second aspect, there is a first chamber inside the motor, and there is a second chamber inside the housing. The drive pulley, the driven pulley, and the transmission belt are disposed in the second chamber. The adjustment pin further includes a through hole. The through hole is provided in the adjustment pin and is used to connect the first chamber and the second chamber. In this case, the first chamber and the second chamber can be connected through the through hole, so that air tightness detection can be simultaneously performed in the first chamber of the motor and the second chamber of the housing. In addition, the first chamber is connected to the second chamber through the through hole. Therefore, in comparison with a separate second chamber, space is larger. This can reduce pressure fluctuation occurring in the second chamber when the motor rotates, and reduce noise generated when the motor rotates. The first chamber is connected to the second chamber through the through hole, so that air heated in the second chamber due to operation of the motor can be exchanged with air inside the first chamber through the through hole, improving heat dissipation efficiency of the motor.

In a fourth possible implementation of the second aspect, a positioning end face is further included. The positioning end face is configured to abut against the housing. In this case, the positioning end face abuts against the housing, so that positioning can be implemented when the adjustment pin is mounted on the housing, to facilitate mounting of the adjustment pin.

A third aspect of this application provides a transmission apparatus adjustment method, where the transmission apparatus is the transmission apparatus in any one of the fifth to the thirteenth possible implementations of the first aspect. The method includes: adjusting a rotation angle of a drive pulley rotating around an adjustment pin; and when tension of a transmission belt is greater than a first tension threshold, fixedly connecting a first motor to a housing. Therefore, the drive pulley may be controlled to rotate around the adjustment pin, to adjust a distance between the drive pulley and a driven pulley and adjust a magnitude of tension of the transmission belt between the drive pulley and the driven pulley.

In a possible implementation of the third aspect, before the adjusting a rotation angle of a drive pulley rotating around an adjustment pin, the method further includes: disconnecting a fixed connection between the first motor and the housing.

A further aspect of this application provides a vehicle, including the transmission apparatus in the possible implementations of the first aspect.

These aspects and another aspect of this application will be clearer and easier to understand in descriptions of the following (a plurality of) embodiments.

## BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, content referred to by same reference numerals is also the same. Specific accompanying drawings are described as follows:

FIG. 1 is a schematic diagram of a structure of a transmission apparatus in solution 1;
FIG. 2 is another schematic diagram of a structure of a transmission apparatus in solution 1;

FIG. 3 is a schematic diagram of a structure of a transmission apparatus in solution 2;

FIG. 4 is a schematic diagram of a structure of a transmission apparatus according to an embodiment of this application;

FIG. 5 is a schematic diagram of an REPS application scenario according to an embodiment of this application;

FIG. 6 is a schematic diagram of a transmission relationship of front wheel steering in FIG. 5;

FIG. 7 is a schematic diagram of a transmission relationship of rear wheel steering in FIG. 5;

FIG. 8 is a schematic diagram of a structure of an REPS in FIG. 5;

FIG. 9 is a schematic exploded view of a structure of an REPS in FIG. 5;

FIG. 10 is a schematic diagram of a structure of an adjustment pin according to an embodiment of this application;

FIG. 11 is another schematic diagram of a structure of an adjustment pin according to an embodiment of this application;

FIG. 12 is a schematic axial diagram of a motor according to an embodiment of this application;

FIG. 13 is another schematic axial diagram of a motor according to an embodiment of this application;

FIG. 14 is another schematic diagram of a structure of an REPS according to an embodiment of this application;

FIG. 15 is another schematic diagram of a structure of an adjustment pin according to an embodiment of this application;

FIG. 16 is a schematic diagram of a position relationship among a tension pulley, a drive pulley, and a driven pulley;

FIG. 17 is a schematic diagram of a relationship between a length of a transmission belt and a position of a drive pulley;

FIG. 18 is a schematic diagram of adjusting tension of a transmission belt;

FIG. 19 is a schematic flowchart of a method for adjusting a tension degree of a transmission belt according to an embodiment of this application; and

FIG. 20 is a schematic flowchart of an air tightness detection method according to an embodiment of this application.

Reference numerals:

101: housing; 102: oblong hole; 103: motor; 104: drive shaft; 105: drive pulley; 106: driven pulley; 107: transmission belt; 108: boss; 109: circular hole; 110: tension pulley; 2: vehicle; 20: steering system; 20a: front wheel steering; 20b: rear wheel steering; 21: steering wheel; 22: first steering shaft; 23: second steering shaft; 24: third steering shaft; 241: gear; 25: housing; 251: second chamber; 26: steering rod; 261: rack; 27: REPS; 271: motor; 2711: drive shaft; 2712: first chamber; 2713: shell; 2714: first fastening part; 2715: connection hole; 2716: positioning rack; 2717: fastening plate; 2718: positioning pinion; 272: drive pulley; 273: driven pulley; 274: bearing; 275: transmission belt; 276: adjustment pin; 2761: fixed end; 2762: adjustment end; 2763: positioning end face; 2764: tension pulley; 2765: through hole; 2765a: first end; 2765b: second end.

## DESCRIPTION OF EMBODIMENTS

Solution 1, which is not covered by the claims, adjusts tension of a transmission belt by adjusting a center distance between a drive pulley and a driven pulley.

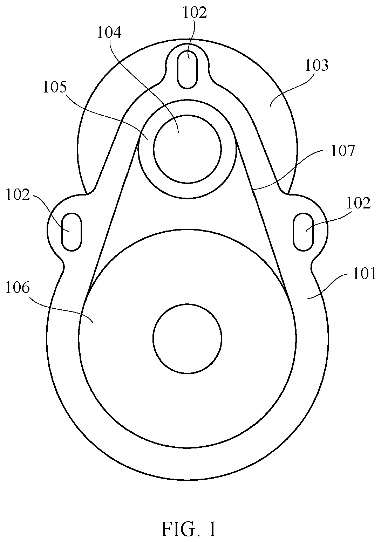

FIG. 1 is a schematic diagram of a structure of a transmission apparatus in solution 1. As shown in FIG. 1, three oblong holes 102 are provided on a housing 101, and a bolt may pass through the oblong hole 102, to fasten a motor 103 to the housing 101. The bolt may move along and inside the oblong hole 102, to adjust a position of the motor 103 on the housing 101. In this case, a distance between a drive pulley 105 disposed on a drive shaft 104 of the motor 103 and a driven pulley 106 disposed on the housing 101 may be adjusted, to adjust tension of a transmission belt 107 used to connect the drive pulley 105 and the driven pulley 106.

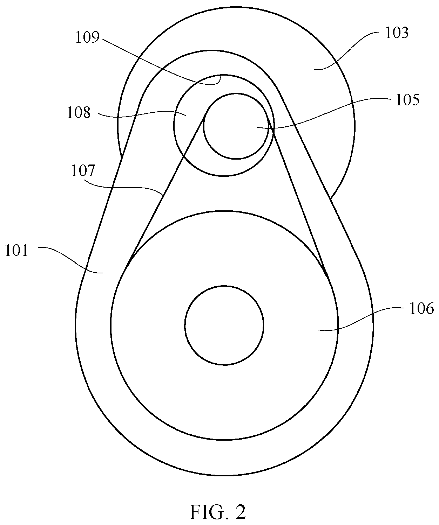

FIG. 2 is another schematic diagram of a structure of a transmission apparatus in solution 1. As shown in FIG. 2, a cylindrical boss 108 is disposed on a shell of a motor 103 at an eccentric position of a drive shaft 104, and the drive shaft 104 extends out of the boss 108. A circular hole 109 adapted to the boss 108 is provided on a housing 101. The boss 108 rotates in the circular hole 109, to adjust a position of the drive shaft 104 of the motor 103 on the housing 101. In this case, a distance between a drive pulley 105 disposed on a drive shaft 104 of the motor 103 and a driven pulley 106 disposed on the housing 101 may be adjusted, to adjust tension of a transmission belt 107 used to connect the drive pulley 105 and the driven pulley 106.

Solution 1 has at least the following two defects. Defect 1: A relatively large adjustment distance or angle is required for adjusting the tension of the transmission belt 107. Therefore, a volume of the housing 101 needs to be relatively large, and a relatively large housing 101 requires more materials and more arrangement space, which is inconvenient for entire vehicle arrangement. Defect 2: The boss 108 is assembled into the circular hole 109. To obtain sufficient stability, the boss 108 is relatively thick, and usually needs to reach 8 mm to 10 mm. Therefore, the housing 101 also needs to reach a same thickness correspondingly, so that assembly of the boss 108 into the circular hole 109 is more stable.

To adjust the tension of the transmission belt, solution 2 adds a tension pulley to change a path of the transmission belt, to adjust the tension of the transmission belt.

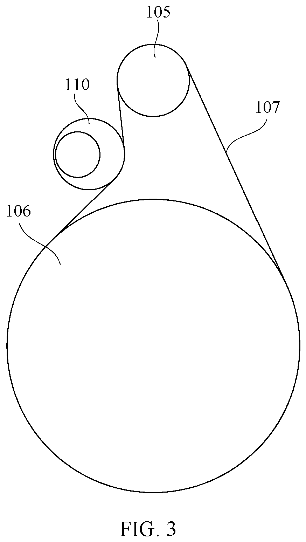

FIG. 3 is a schematic diagram of a structure of a transmission apparatus in solution 2. As shown in FIG. 3, a tension pulley 110 is further disposed between a drive pulley 105 and a driven pulley 106, and an outer circumferential surface of a transmission belt 107 abuts against an outer circumferential surface of the tension pulley 110, in other words, a specific force exists between the transmission belt 107 and the tension pulley 110. A path of the transmission belt 107 is changed by using the tension pulley 110. The tension pulley 110 is mounted in an eccentric manner, so that a position of the tension pulley 110 may be adjusted. A path length of the transmission belt 107 may be adjusted by changing the position of the tension pulley 110. When the path of the transmission belt 107 is lengthened, the transmission belt 107 is tightened. When the path of the transmission belt 107 is shortened, the transmission belt 107 is loosened.

Solution 2, which is not covered by the claims, has at least the following defects: The tension pulley 110 mounted in an eccentric manner is likely to be loosened after being used for a long time. This may cause a decrease in tension of the transmission belt 107 and cause noise when the transmission belt 107 operates. Therefore, the tension pulley 110 has a high loosening requirement during use.

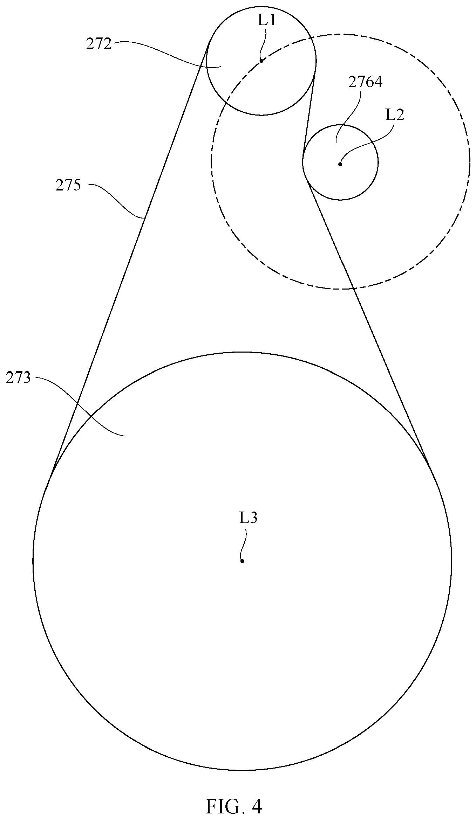

This application provides a transmission apparatus, to adjust tension of a transmission belt. FIG. 4 is a schematic diagram of a structure of a transmission apparatus according to an embodiment of this application. As shown in FIG. 4, the transmission apparatus in this application includes a drive pulley 272, a driven pulley 273, and a transmission belt 275. The drive pulley 272 is connected to the driven pulley 273 by using the transmission belt 275, and an axis L1 of the drive pulley is configured to be capable of rotating around a first axis L2. It should be noted that the first axis L2 provided in this embodiment of this specification of this application is a geometric description, and the first axis L2 may be a virtual rotation axis. The axis L1 of the drive pulley is controlled to rotate around the first axis L2 as a center, to adjust a distance between the drive pulley 272 and the driven pulley 273 and adjust a magnitude of tension of the transmission belt 275 between the drive pulley 272 and the driven pulley 273. In this way, wear on the transmission belt 275 caused by excessively large tension can be avoided, or noise and slipping caused by excessively small tension can be avoided.

In the transmission apparatus provided in this embodiment of this application, a position of a rotation center of the drive pulley 272 may be changed. In a possible implementation, the rotation center of the drive pulley 272 may rotate around the first axis L2. After the rotation center of the drive pulley 272 rotates around the first axis L2, a relative distance between axis L1 of the drive pulley and an axis L3 of the driven pulley changes. Specifically, in the transmission apparatus provided in this embodiment of this application, the drive pulley 272 is connected to an output shaft of a motor, and the motor drives, by using the output shaft, the drive pulley 272 to rotate. When a position of the drive pulley 272 is adjusted, the motor may rotate around the first axis L2.

The transmission apparatus provided in this embodiment of this application further includes an adjustment pin. An axis of the adjustment pin coincides with the first axis L2, and the motor may be mounted on the housing by using the adjustment pin. When a position of the drive pulley 272 is adjusted, the motor may rotate around the axis of the adjustment pin.

A tension pulley 2764 is further disposed on the adjustment pin, and an outer circumferential surface of the tension pulley 2764 abuts against the transmission belt 275. When the drive pulley 272 rotates around the adjustment pin for adjustment, a position between the tension pulley 2764 and the drive pulley 272 may be changed. This can change a path through which the transmission belt 275 passes when connecting the drive pulley 272 and the driven pulley 273, change a length of the transmission belt 275, and adjust the tension of the transmission belt 275.

In another possible implementation, the motor may be further connected to the housing by using a rotation axis, an axis of the rotation axis coincides with the first axis L2, and the motor may rotate around the rotation axis. In addition, the motor may be further connected to the housing in another manner, for example, may be connected through a shaft connection, a pin connection, or a rotation pair connection, so that the motor and the housing may rotate relative to each other. A person skilled in the art may understand that other implementations without creative input also fall within the scope of the technical solution of this application.

The transmission apparatus provided in this embodiment of this application may be applied to an REPS, or may be applied to a system that requires transmission, such as an electric tool. This is not limited herein. With reference to accompanying drawings, the following uses an REPS as an example to describe in detail a specific structure of the transmission apparatus in this embodiment of this application.

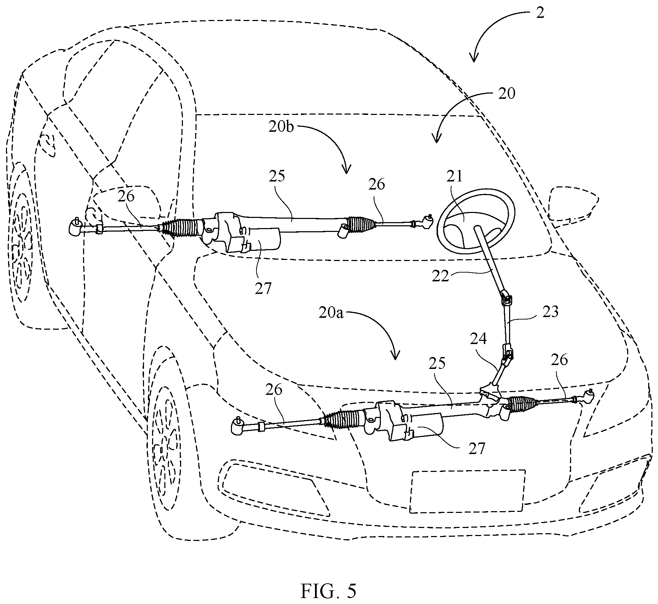

FIG. 5 is a schematic diagram of an application scenario of an REPS 27 according to an embodiment of this application. As shown in FIG. 5, a steering system 20 is disposed in a vehicle 2, and the steering system 20 may include front wheel steering 20a and rear wheel steering 20b. The REPS 27 in this embodiment of this application may be disposed in the front wheel steering 20a, to assist front wheel steering or may directly drive front wheel steering. Alternatively, the REPS 27 may be disposed in the rear wheel steering 20b, to drive rear wheel steering. This is not limited herein.

This embodiment of this application uses an example in which the vehicle 2 is an automobile, and this should not be considered as a limitation on this embodiment of this application. The vehicle 2 may be a conventional fuel automobile, or may be a new energy automobile such as a battery electric automobile or a hybrid automobile. The vehicle 2 may be any one of different types of automobiles such as a car, a truck, a passenger bus, and an SUV (sport utility vehicle, sport utility vehicle).

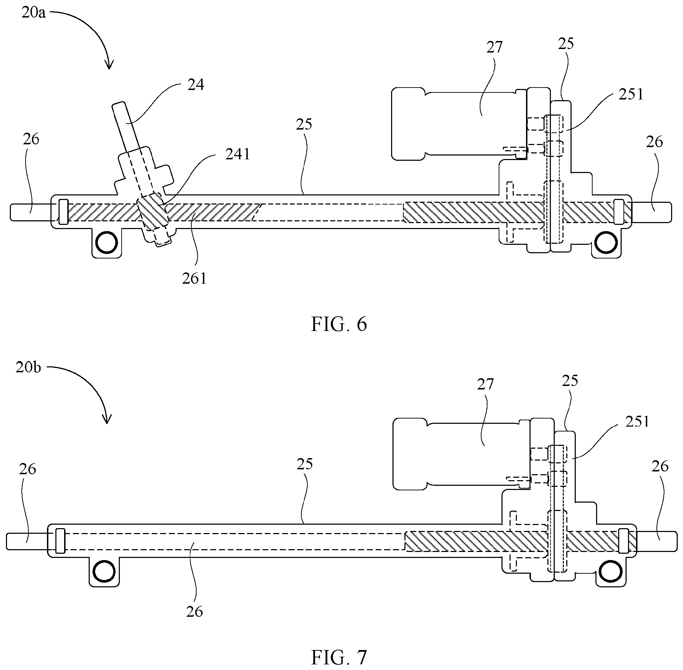

FIG. 6 is a schematic diagram of a transmission relationship of the front wheel steering 20a in FIG. 5. As shown in FIG. 5 and FIG. 6, the front wheel steering 20a includes: a steering wheel 21, a first steering shaft 22, a second steering shaft 23, a third steering shaft 24, a housing 25, a steering rod 26, and an REPS 27. The housing 25 is fixedly disposed in the vehicle 2, and the steering rod 26 is disposed in the housing 25. Two ends of the steering rod 26 extend from two ends of the housing 25, and the two ends of the steering rod 26 are respectively connected to two corresponding front wheels. Two ends of the second steering shaft 23 are respectively connected to one end of the first steering shaft 22 and one end of the third steering shaft 24 by using a universal joint, so that the first steering shaft 22, the second steering shaft 23, and the third steering shaft 24 can avoid some components in the vehicle 2, facilitating mounting of the steering system 20. The other end of the first steering shaft 22 is connected to a center of the steering wheel 21, and a driver may control the steering wheel 21 to rotate. The other end of the third steering shaft 24 extends into the housing 25, and a gear 241 is disposed at a corresponding position of the steering rod 26. A rack 261 is disposed on the steering rod 26 in an extension direction of the steering rod 26 at a position corresponding to the gear 241. The gear 241 is engaged with the rack 261, and the driver rotates the steering wheel 21 to drive the gear 241 to rotate, to drive the steering rod 26 to move in an extension direction of the rack 261 to change a direction of a wheel.

The REPS 27 is fixedly disposed on the housing 25. When the driver rotates the steering wheel 21 to drive the steering rod 26 to move in the extension direction of the rack 261, the REPS 27 may output a specific force to the steering rod 26, to reduce a force required by the driver to rotate the steering wheel 21. Alternatively, the REPS 27 may further receive steering response requirement information sent by an autonomous driving center, and the REPS 27 drives the steering rod 26 to move in the extension direction of the rack 261, to drive a front wheel of the vehicle 2 to change a direction.

FIG. 7 is a schematic diagram of a transmission relationship of the rear wheel steering 20b in FIG. 5. As shown in FIG. 5 and FIG. 7, the rear wheel steering 20b includes a housing 25, a steering rod 26, and an REPS 27. The housing 25 is fixedly disposed in the vehicle 2, and the steering rod 26 is disposed in the housing 25. Two ends of the steering rod 26 extend from two ends of the housing 25, and the two ends of the steering rod 26 are respectively connected to two corresponding rear wheels. The REPS 27 is fixedly disposed on the housing 25. When the driver rotates the steering wheel 21 to control front wheel steering, the REPS 27 may drive the steering rod 26 to move in an extension direction of the steering rod 26, to drive rear wheel steering. Alternatively, the REPS 27 may further receive steering response requirement information sent by the autonomous driving center, to drive a rear wheel of the vehicle 2 to change a direction.

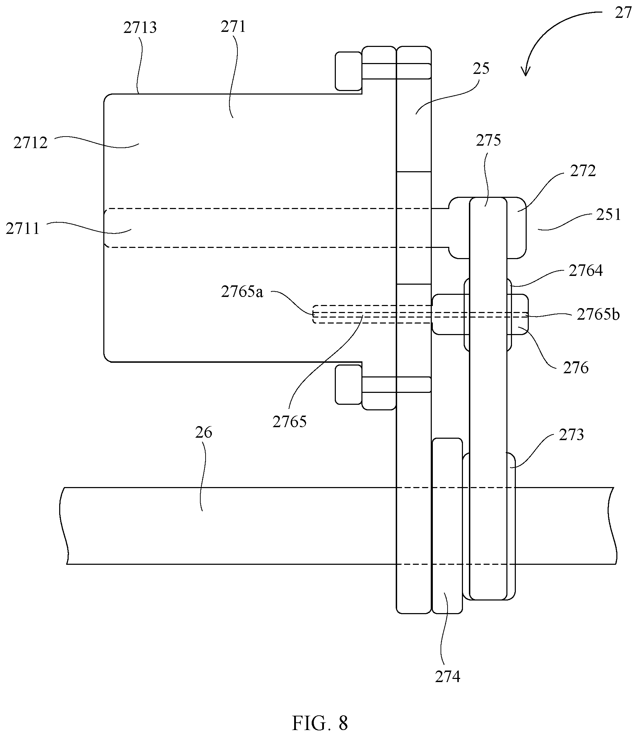

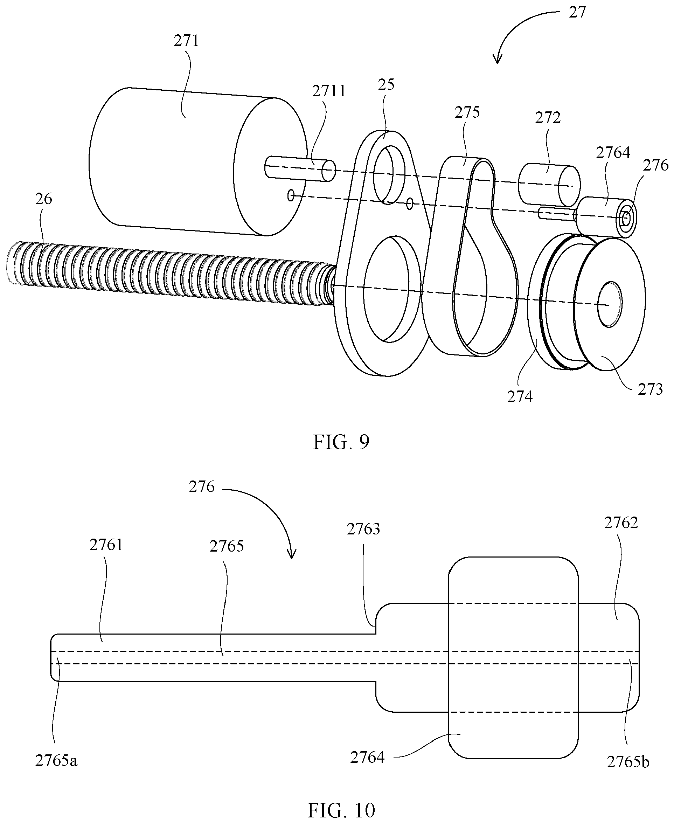

FIG. 8 is a schematic diagram of a structure of the REPS 27 in FIG. 5. FIG. 9 is a schematic exploded view of the structure of the REPS 27 in FIG. 5. As shown in FIG. 8 and FIG. 9, the REPS 27 includes a motor 271, a drive pulley 272, a driven pulley 273, a bearing 274, a transmission belt 275, and an adjustment pin 276. The motor 271 has a drive shaft 2711, and a drive pulley 272 is disposed on the drive shaft 2711. The motor 271 is hinged to the housing 25 by using the adjustment pin 276. The adjustment pin 276 and the drive shaft 2711 are disposed in parallel. The adjustment pin 276 is located on the motor 271 at an eccentric position of the drive shaft 2711, so that the motor 271 can rotate around the adjustment pin 276, adjusting positions of the drive shaft 2711 and the drive pulley 272.

The driven pulley 273 is fixedly disposed on the housing 25 by using the bearing 274 or by using another rotation structure, so that the driven pulley 273 is located on the housing 25 at a position corresponding to the drive pulley 272 and can rotate on the housing 25. The drive pulley 272 is connected to the driven pulley 273 by using the transmission belt 275. The transmission belt 275 may be an annular part with specific elasticity that is made of rubber and additives, or made of another suitable material. There is a specific friction force between the transmission belt 275 and both the drive pulley 272 and the driven pulley 273. When the drive pulley 272 rotates, the driven pulley 273 can be driven to rotate by using the transmission belt 275, so that the drive pulley 272, the driven pulley 273, and the transmission belt 275 form a belt transmission structure.

The motor 271 rotates by using the adjustment pin 276 as a center, to adjust a position of the drive pulley 272 and further adjust a distance between the drive pulley 272 and the driven pulley 273. This can adjust tension of the transmission belt 275. Because the motor 271 is hinged to the housing 25 by using the adjustment pin 276, a boss does not need to be disposed on a shell of the motor 271 as in solution 1. This can reduce a material of the shell of the motor 271, and a mold of the shell of the motor 271 does not need to be redesigned, provided that a hole is drilled at a corresponding position of the shell of the motor 271 to mount the adjustment pin 276. This reduces a requirement for machining precision of the shell of the motor 271, and saves production costs.

The housing 25 is enclosed to form a second chamber 251, and the drive pulley 272, the driven pulley 273, the bearing 274, and the transmission belt 275 are disposed in the second chamber 251. The motor 271 is mounted on the housing 25, and is located outside the second chamber 251. The drive shaft 2711 of the motor 271 extends into the second chamber 251, and the drive pulley 272 is fixedly disposed on the drive shaft 2711, so that the motor 271 can drive the drive pulley 272 to rotate.

The driven pulley 273 may be disposed on the housing 25 by using the bearing 274 or by using the another rotation structure, so that the driven pulley 273 may rotate on the housing 25. A manner of connecting the bearing 274 to both the driven pulley 273 and the housing 25 may be specifically that an outer ring of the bearing 274 is fixedly connected to the housing 25, and an inner ring of the bearing 274 is fixedly connected to the driven pulley 273. In this case, the driven pulley 273 may be fastened the housing 25 and can rotate on the housing 25.

The steering rod 26 of the steering system 20 passes through the driven pulley 273, and an axle of the steering rod 26 coincides with an axle of the driven pulley 273. The steering rod 26 and the driven pulley 273 are connected by using a thread to form a screw transmission structure, so that when the driven pulley 273 rotates, the steering rod 26 may be driven to move linearly in an axial direction. The screw transmission structure may be a trapezoidal screw structure, a ball screw structure, a planetary roller screw structure, or any other possible implementation form. The trapezoidal screw structure means that the steering rod 26 and the driven pulley 273 are connected through a threaded connection based on a trapezoidal thread, to convert a rotating motion of the driven pulley 273 into a linear motion of the steering rod 26. This structure has an advantage such as a simple structure and low costs. In the ball screw structure, a ball is placed between the steering rod 26 and the driven pulley 273 that are connected through the threaded connection, and sliding friction is replaced by rolling friction. This can reduce a friction force between the steering rod 26 and the driven pulley 273, and improve transmission efficiency between the steering rod 26 and the driven pulley 273. In the planetary roller screw structure, a plurality of rollers are disposed in the driven pulley 273. The rollers may rotate in the driven pulley 273. The plurality of rollers surround an outer circumferential surface of the steering rod 26. A thread on an outer circumferential surface of the roller is engaged with a thread on an outer circumferential surface of the steering rod 26. Therefore, point contact between the ball and both the steering rod 26 and the driven pulley 273 in the ball screw structure may be converted into line contact between the roller and the steering rod 26. This can increase a contact surface while maintaining high-efficiency transmission, improve a bearing capacity and rigidity between the steering rod 26 and the driven pulley 273, and enhance an impact resistance capability between the steering rod 26 and the driven pulley 273.

As above, when the driver operates the steering wheel 21 to control the vehicle 2 to turn, a torque angle sensor disposed in the vehicle 2 can collect steering information transferred by the steering wheel 21, and transfer the steering information to a controller in the vehicle 2. After receiving the steering information, the controller performs calculation and processing, and then sends a motor current control requirement to the motor 271, to control the drive shaft 2711 of the motor 271 to output a corresponding torque and rotational speed/angle. The steering rod 26 is finally driven to perform linear motion through the belt transmission structure formed by the drive pulley 272, the driven pulley 273, and the transmission belt 275, and the screw transmission structure between the steering rod 26 and the driven pulley 273. Therefore, the REPS 27 in the front wheel steering 20a may output a specific force to the steering rod 26 when the driver operates the steering wheel 21, to assist front wheel steering of the vehicle 2, and reduce a force required by the driver to operate the steering wheel 21. In addition, the REPS 27 in the rear wheel steering 20b may control the steering rod 26 to perform linear motion, to drive rear wheel steering of the vehicle 2. This improves mobility and stability of the vehicle 2 during steering, and reduces a turning radius of the vehicle 2.

Alternatively, the REPS 27 in the front wheel steering 20a and the REPS 27 in the rear wheel steering 20b may directly receive the steering response requirement information sent by the autonomous driving center, to drive the front wheel and the rear wheel of the vehicle 2 to change directions, implementing automatic control of steering of the vehicle 2.

FIG. 10 is a schematic diagram of a structure of the adjustment pin 276 according to an embodiment of this application, and shows a specific structure of the adjustment pin 276 in FIG. 8. As shown in FIG. 10, the adjustment pin 276 may be in a cylindrical shape, and the adjustment pin 276 may be divided into two parts in an axial direction: a fixed end 2761 and an adjustment end 2762. The fixed end 2761 is configured to be fixedly connected to the housing 25, and a connection manner may be, for example, a threaded connection or a press-fit connection. Because the fixed connection between the adjustment pin 276 and the housing 25 imposes a relatively low requirement on a thickness of the housing 25, the thickness of the housing 25 may be set to, for example, 4 mm to 6 mm. The thickness of the housing 25 does not need to be set to 8 mm to 10 mm, to obtain sufficient stability in the foregoing solution 1. This can reduce the thickness of the housing 25, reduce a weight of the housing 25, and reduce production costs. In addition, after the motor 271 is mounted on the housing 25, the drive shaft 2711 needs to pass through the housing 25 before the drive pulley 272 is mounted. Reducing the thickness of the housing 25 may correspondingly reduce a length of the drive shaft 2711, so that a length of the drive shaft 2711 exposed from the motor 271 is shorter. Therefore, rigidity and durability of the drive shaft 2711 are improved, and transmission of the drive shaft 2711 is more stable.

As shown in FIG. 8 and FIG. 10, a length of the fixed end 2761 is greater than the thickness of the housing 25. After the fixed end 2761 is fixedly connected to the housing 25, a part of the fixed end 2761 is exposed from the housing 25, and is configured to be hinged to the motor 271. In this case, the motor 271 can rotate on the housing 25 to adjust positions of the drive shaft 2711 and the drive pulley 272, and the motor 271 can also be positioned to facilitate bolt fastening. In addition, the adjustment pin 276 is connected to the motor 271 and the housing 25, so that connection strength between the housing 25 and the motor 271 can be improved. After the motor 271 and the housing 25 are fastened by using a bolt, when the bolt is loose or fails due to vibration or another reason, for example, when only one bolt in a plurality of bolts is fastened between the motor 271 and the housing 25, and other bolts all fail due to fracture or detachment, the adjustment pin 276 may prevent the motor 271 from rotating around the only one bolt, fastening the motor 271. After the adjustment pin 276 is fastened to the housing 25, the adjustment end 2762 is located in the second chamber 251. A tension pulley 2764 is fixedly disposed on the adjustment end 2762 at a corresponding position of the drive pulley 272 and the driven pulley 273. The tension pulley 2764 may be formed by the bearing 274 or another type of rotating component, and the tension pulley 2764 may be fastened to the adjustment end 2762 through an interference fit, a thread connection, or the like.

Radiuses of the fixed end 2761 and the adjustment end 2762 may be set to be different. For example, as shown in FIG. 10, a radius of the fixed end 2761 is less than that of the adjustment end 2762. A positioning end face 2763 is disposed between the fixed end 2761 and the adjustment end 2762, and the positioning end face 2763 is connected to outer circumferential surfaces of both the fixed end 2761 and the adjustment end 2762. The positioning end face 2763 may be set to be at a specific tilt angle with the outer circumferential surfaces of both the fixed end 2761 and the adjustment end 2762, or may be set to be perpendicular to the outer circumferential surfaces of both the fixed end 2761 and the adjustment end 2762 as shown in FIG. 10. When the adjustment pin 276 is fastened to and mounted on the housing 25, the positioning end face 2763 may abut against the housing 25, to perform positioning.

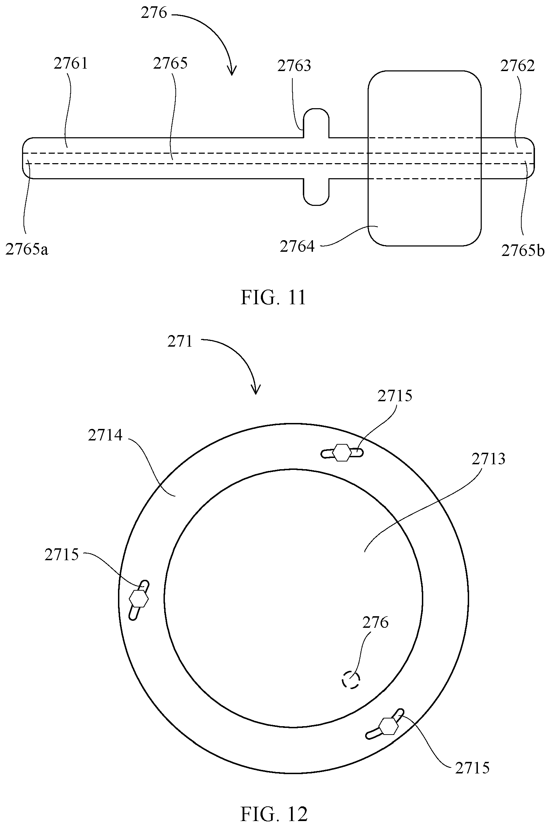

FIG. 11 is another schematic diagram of a structure of an adjustment pin 276 according to an embodiment of this application. As shown in FIG. 11, radiuses of the fixed end 2761 and the adjustment end 2762 may be set to be the same. An annular flange or another protrusion structure is disposed at a connection position between the fixed end 2761 and the adjustment end 2762. A positioning end face 2763 is disposed on a surface that is of the annular flange and that faces the fixed end 2761. When the adjustment pin 276 is fastened to and mounted on the housing 25, the positioning end face 2763 may abut against the housing 25, to perform positioning.

As shown in FIG. 8, the shell 2713 of the motor 271 is enclosed to form a first chamber 2712 in the motor 271. A stator fixedly connected to the shell 2713 and a rotor fixedly connected to the drive shaft 2711 may be disposed in the first chamber 2712. The first chamber 2712 may be isolated from an outside of the motor 271 by the shell 2713 of the motor 271. After the motor 271 is hinged to the adjustment pin 276, the fixed end 2761 extends into the first chamber 2712. As shown in FIG. 10 and FIG. 11, a through hole 2765 is further provided in the adjustment pin 276. The through hole 2765 may be provided along an axle of the adjustment pin 276 as shown in FIG. 10 and FIG. 11, or may be located at another position in the adjustment pin 276. When the through hole 2765 is located at the axle, the through hole 2765 may be processed more conveniently during production of the adjustment pin 276, improving production efficiency. Alternatively, the adjustment pin 276 may be directly processed by using a pipe material, so that a drilling operation is not required during production. This simplifies a production procedure and improves production efficiency.

A first end 2765a of the through hole 2765 is located in the first chamber 2712, and a second end 2765b of the through hole 2765 is located outside the motor 271, so that the first chamber 2712 is connected to the outside of the motor 271. When the rotor of the motor 271 rotates, air in the first chamber 2712 is driven to move in the first chamber 2712, so that a pressure in the first chamber 2712 fluctuates, and the motor 271 generates relatively large noise. The first chamber 2712 is connected to the outside of the motor 271 through the through hole 2765, so that air can enter or exit the first chamber 2712 through the through hole 2765. This can reduce air pressure fluctuation in the first chamber 2712 when the rotor of the motor 271 rotates, and reduce noise generated when the motor 271 rotates. In addition, air may enter or exit the first chamber 2712 through the through hole 2765, so that air may flow between the first chamber 2712 and the outside of the motor 271. In this case, air heated in the first chamber 2712 due to operation of the motor 271 is exchanged with air outside the motor 271. This implements heat exchange, and improves heat dissipation efficiency of the motor 271.

As shown in FIG. 8, the second end 2765b of the through hole 2765 may be located in the second chamber 251, so that the first chamber 2712 can be connected to the second chamber 251 through the through hole 2765. In this case, air tightness detection can be simultaneously performed on both the first chamber 2712 and the second chamber 251, to detect air tightness of both the motor 271 and the housing 25.

Further, the adjustment pin 276 may be a straight shaft in which axis of each shaft segment lies on a same straight line, or may be a crankshaft in which axis of each shaft segment lies on different straight lines. This is not limited.

FIG. 12 is a schematic axial diagram of a motor 271 according to an embodiment of this application, and shows a possible manner in which the motor 271 is fixedly connected to a housing 25. As shown in FIG. 12, an annular first fastening part 2714 is disposed on a side that is of a shell 2713 of the motor 271 and that faces the housing 25 along an outer circumferential surface of the shell 2713. A plurality of connection holes 2715 are provided in the first fastening part 2714. A bolt may pass through the connection hole 2715 to connect to the housing 25 through a threaded connection, so that the motor 271 is fastened to the housing 25. The connection hole 2715 may be an arc hole shown in FIG. 12, or may be an oblong hole. The connection hole 2715 may be arranged in a manner in which the adjustment pin 276 is used as a circle center, as shown in FIG. 12. In this case, after the motor 271 rotates a specific angle by using the adjustment pin 276 as a center, the bolt can pass through the connection hole 2715 to fixedly connect the motor 271 to the housing 25.

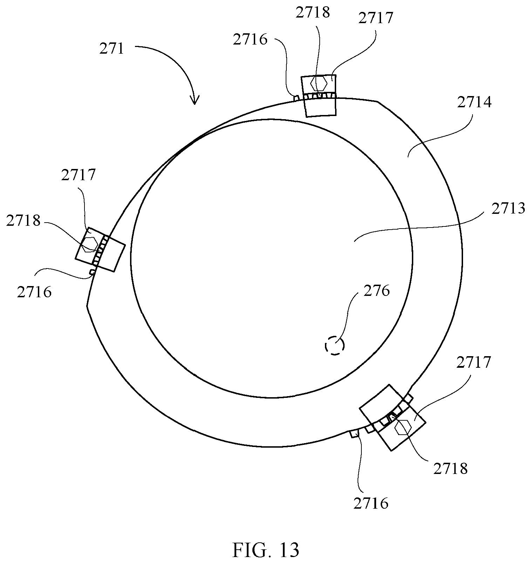

FIG. 13 is another schematic axial diagram of a motor 271 according to an embodiment of this application, and shows another possible manner in which the motor 271 is fixedly connected to a housing 25. As shown in FIG. 13, a plurality of positioning racks 2716 are disposed on a first fastening part 2714 of the motor 271, and the positioning racks 2716 are arranged by using an adjustment pin 276 as a circle center. A fastening plate 2717 configured to fasten the motor 271 on the housing 25 is further included. The fastening plate 2717 is fastened, by using a bolt, to the housing 25 at a position corresponding to the positioning rack 2716. The fastening plate 2717 extends to the first fastening part 2714, and may press the first fastening part 2714 against the housing 25 for fastening. A positioning pinion 2718 is disposed on the fastening plate 2717 at a position corresponding to the rack 261. The positioning pinion 2718 is engaged with the positioning rack 2716, to prevent the motor 271 from rotating.

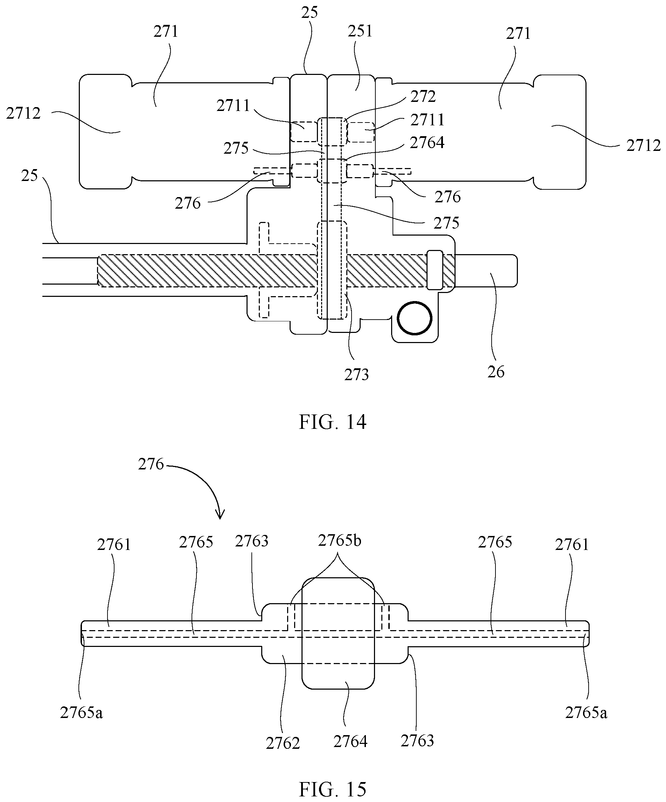

FIG. 14 another schematic diagram of a structure of an REPS 27 according to an embodiment of this application, and shows another structural form of the REPS 27 in FIG. 5. As shown in FIG. 14, a second chamber 251 is disposed in a housing 25, and an adjustment pin 276 and two motors 271 are fixedly disposed on the housing 25. A tension pulley 2764 is disposed in a middle part of the adjustment pin 276, and the tension pulley 2764 is located in the second chamber 251. Two ends of the adjustment pin 276 extend out of an outer surface of the housing 25, and are respectively hinged to the two motors 271. The two motors 271 are oppositely disposed on the housing 25, and axles of drive shafts 2711 of the two motors 271 coincide with each other, and the drive shafts extend into the second chamber 251 for a fixed connection. A drive pulley 272 is disposed on the drive shaft 2711. A driven pulley 273 is disposed in the second chamber 251. The drive pulley 272 is connected to the driven pulley 273 by using a transmission belt 275. The tension pulley 2764 is located between the drive pulley 272 and the driven pulley 273, and an outer circumferential surface of the tension pulley 2764 abuts against the transmission belt 275. In this case, the two motors 271 may simultaneously rotate by using the adjustment pin 276 as an axle, to adjust positions of the drive shaft 2711 and the drive pulley 272. In this case, a distance between the drive pulley 272 and the driven pulley 273 may be adjusted, to adjust tension of the transmission belt 275. In addition, the two motors 271 may be mutually redundant. When one motor 271 is faulty and one drive shaft 2711 cannot rotate, the other motor 271 may continue to work, to drive the other drive shaft 2711 to rotate. In this way, the REPS 27 can still work normally when one motor 271 is faulty. This improves reliability of the REPS 27.

Further, the motor 271 may be a six-phase motor, a twelve-phase motor, or another type of multi-phase induction motor, so that multiple phases in the motor 271 are redundant to each other. When one (or several) stator winding is open-circuited or one (or several) bridge arm of an inverter is open-circuited, starting and running of the motor 271 are not affected. This can further improve reliability of the REPS 27.

FIG. 15 is another schematic diagram of a structure of the adjustment pin 276 according to an embodiment of this application, and shows a structure of the adjustment pin 276 in FIG. 14. As shown in FIG. 14 and FIG. 15, the adjustment pin 276 may be in a cylindrical shape, and the adjustment pin 276 may be divided, in an axial direction, into two fixed ends 2761 at two ends and one adjustment end 2762 at a middle position. The adjustment end 2762 is located in the second chamber 251, and the tension pulley 2764 is disposed on the fixed end 2761. The two fixed ends 2761 located at the two ends are fixedly connected to the housing 25 respectively, and the two fixed ends 2761 extend out from the housing 25 and enter the first chamber 2712 of the motor 271. A radius of the adjustment end 2762 is greater than radiuses of the two fixed ends 2761, and a positioning end face 2763 is formed at a connection position between the adjustment end 2762 and the two fixed ends 2761. After the adjustment pin 276 is mounted, the positioning end face 2763 abuts against an inner surface of the second chamber 251. The positioning end face 2763 is disposed, so that positioning and mounting can be implemented when the adjustment pin 276 is mounted and fastened. In addition, the positioning end face 2763 abuts against the inner surface of the second chamber 251, so that mounting stability of the adjustment pin 276 is improved. Through holes 2765 are further provided in the adjustment pin 276. One part of through holes 2765 are provided in an axial direction of the adjustment pin 276, and the other part of through holes 2765 are provided in a radial direction of the adjustment end 2762. The two parts of the through hole 2765 are connected. The part of through holes 2765 provided in the axial direction of the adjustment pin 276 form an open first end 2765a at each of the two ends of the adjustment pin 276, the other part of through holes 2765 provided in the radial direction of the adjustment end 2762 form an open second end 2765b on a surface of the adjustment end 2762. After mounting, two first ends 2765a are respectively located in the first chambers 2712 of the two motors 271, and the second end 2765b is located in the second chamber 251, so that the second chamber 251 is connected to the two first chambers 2712 through the through hole 2765.

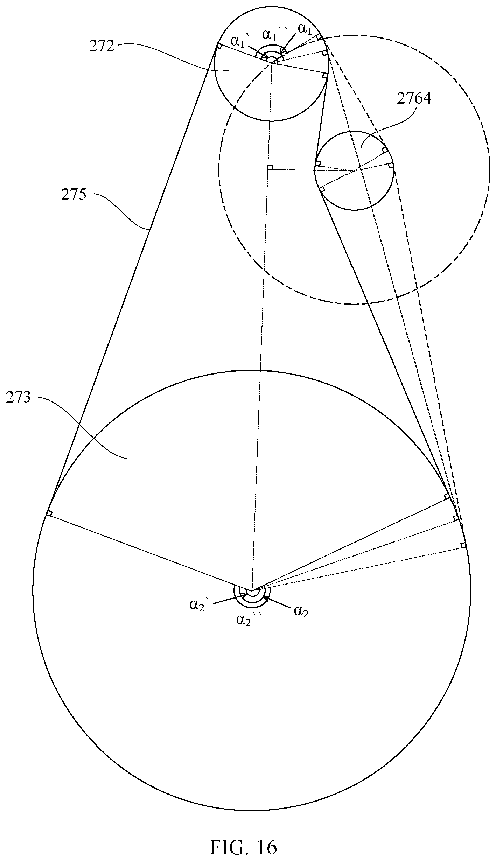

FIG. 16 is a schematic diagram of a position relationship among a tension pulley 2764, a drive pulley 272, and a driven pulley 273. As shown in FIG. 16, an outer circumferential surface of the tension pulley 2764 abuts against a transmission belt 275, and a path of the transmission belt 275 between the drive pulley 272 and the driven pulley 273 is changed by using the tension pulley 2764. In this case, the transmission belt 275 on one side is not directly connected to the driven pulley 273 by the drive pulley 272, but is connected to the driven pulley 273 after the path is changed by the tension pulley 2764. In this case, a path through which the transmission belt 275 passes between the drive pulley 272 and the driven pulley 273 is longer. This increases tension of the transmission belt 275, and expands an adjustment range of the tension of the transmission belt 275.

Further, as shown in FIG. 16, the outer circumferential surface of the tension pulley 2764 may be disposed to abut against an outer circumferential surface of the transmission belt 275, or may be disposed to abut against an inner circumferential surface of the transmission belt 275. The path of the transmission belt 275 between the drive pulley 272 and the driven pulley 273 is changed by using the tension pulley 2764, so that a belt contact angle formed by the transmission belt 275, the drive pulley 272, and the driven pulley 273 (which is a central angle corresponding to a contact arc between the transmission belt 275 and the pulleys) may be changed. A larger belt contact angle indicates a larger contact area between the transmission belt 275 and both the drive pulley 272 and the driven pulley 273, and a maximum static friction force between the transmission belt 275 and both the drive pulley 272 and the driven pulley 273 is also greater. As shown in FIG. 16, when there is no tension pulley 2764, a belt contact angle formed by the transmission belt 275 and the drive pulley 272 is $\alpha 1$, and a belt contact angle formed by the transmission belt 275 and the driven pulley 273 is $\alpha 2$. When the outer circumferential surface of the tension pulley 2764 abuts against the outer circumferential surface of the transmission belt 275, a belt contact angle formed by the transmission belt 275 and the drive pulley 272 is $\alpha 1'$, and a belt contact angle formed by the transmission belt 275 and the driven pulley 273 is $\alpha 2'$. When the outer circumferential surface of the tension pulley 2764 abuts against the inner circumferential surface of the transmission belt 275, a belt contact angle formed by the transmission belt 275 and the drive pulley 272 is $\alpha 1''$, and a belt contact angle formed by the transmission belt 275 and the driven pulley 273 is $\alpha 2''$. As shown in FIG. 16, $\alpha 1' > \alpha 1 > \alpha 1''$, and $\alpha 2' > \alpha 2 > \alpha 2''$. Therefore, when the outer circumferential surface of the tension pulley 2764 abuts against the outer circumferential surface of the transmission belt 275, the belt contact angle formed by the transmission belt 275, the drive pulley 272, and the driven pulley 273 may be increased, to increase the maximum static friction force between the transmission belt 275, and both the drive pulley 272, and the driven pulley 273. This can improve anti-slip performance between the transmission belt 275 and both the drive pulley 272 and the driven pulley 273, and reduce wear of the transmission belt 275, so that the belt transmission is more stable.

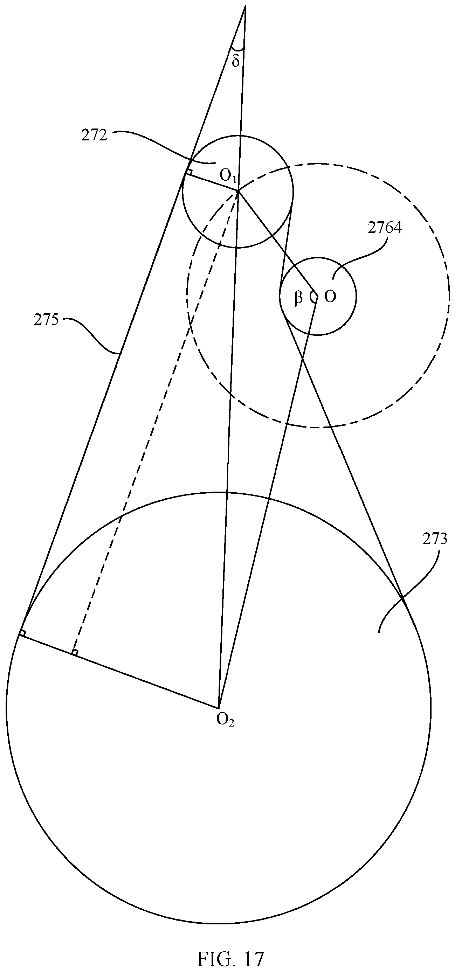

FIG. 17 is a schematic diagram of a relationship between a length of a transmission belt 275 and a position of a drive pulley 272. As shown in FIG. 17, a center of the tension pulley 2764 (namely, a center of an adjustment pin 276) is O, a center of the drive pulley 272 is $O_1$, and a radius is $r_1$. A center of a driven pulley 273 is $O_2$, and a radius is $r_2$. It is assumed that $O_1O_2 = a$, $OO_1 = b$, $OO_2 = c$, and $\angle O_1OO_2 = \beta$. According to the trigonometric function principle, the following can be obtained:

$$\cos \beta = \frac{b^2 + c^2 - a^2}{2bc}$$

$$a = \sqrt{b^2 + c^2 - 2bc \cos \beta}$$

Therefore, b and c are fixed values, and a value of a is related to an angle value of $\beta$.

It is assumed that the length of the transmission belt 275 that is between the drive pulley 272 and the driven pulley 273 and that is opposite to the tension pulley 2764 is 1, and an angle between the transmission belt 275 and $O_1O_2$ is $\delta$. Therefore, according to the trigonometric function principle, it can be obtained that:

$$\sin \delta = \frac{r_2 - r_1}{a}$$

$$\delta = \arcsin \frac{r_2 - r_1}{a}$$

$$\cos \delta = \frac{l}{a}$$

$$l = a \cos \delta$$
$$= a \cos \left( \arcsin \frac{r_2 - r_1}{a} \right)$$
$$= \sqrt{b^2 + c^2 - 2bc \cos \beta} \cos \left( \arcsin \frac{r_2 - r_1}{\sqrt{b^2 + c^2 - 2bc \cos \beta}} \right)$$

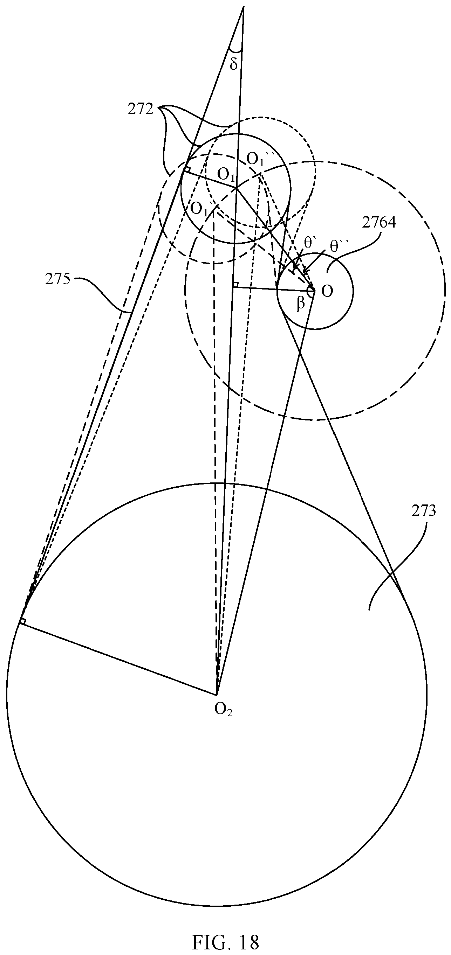

FIG. 18 is a schematic diagram of adjusting tension of a transmission belt 275. As shown in FIG. 18, when the tension of the transmission belt 275 is adjusted, positions of a driven pulley 273 and a tension pulley 2764 are fixed, and a motor 271 rotates by using an adjustment pin 276 as a center. In this case, a drive pulley 272 rotates by using a center O of the tension pulley 2764 as a center. A position of the drive pulley 272 is adjusted counterclockwise, so that a rotation angle of the drive pulley 272 is θ'. In this case, a center of the drive pulley 272 is $O_1$', and a length of the transmission belt 275 that is between the drive pulley 272 and the driven pulley 273 and that is opposite to the tension pulley 2764 is 1'. The position of the drive pulley 272 is adjusted clockwise, so that the rotation angle of the drive pulley 272 is θ''. In this case, the center of the drive pulley 272 is $O_1$'', and the length of the transmission belt 275 that is between the drive pulley 272 and the driven pulley 273 and that is opposite to the tension pulley 2764 is 1''. It is assumed that $O_1$' $O_2$ = a', and $O_1$' $O_2$ = a''. According to the trigonometric function principle, the following can be obtained:

$$\cos\left(\beta - \theta^{`}\right) = \frac{b^2 + c^2 - a^{`2}}{2bc}$$

$$a^{`} = \sqrt{b^2 + c^2 - 2bc\cos\left(\beta - \theta^{`}\right)}$$

$$\cos\delta = \frac{l^{`}}{a^{`}}$$

$$l^{`} = a^{`}\cos\delta$$

$$= a^{`}\cos\left(\arcsin\frac{r_2 - r_1}{a^{`}}\right)$$

$$= \sqrt{b^2 + c^2 - 2bc\cos\left(\beta - \theta^{`}\right)}\cos\left(\arcsin\frac{r_2 - r_1}{\sqrt{b^2 + c^2 - 2bc\cos\left(\beta - \theta^{`}\right)}}\right)$$

$$\cos\left(\beta + \theta^{``}\right) = \frac{b^2 + c^2 - a^{``2}}{2bc}$$

$$a^{``} = \sqrt{b^2 + c^2 - 2bc\cos\left(\beta + \theta^{``}\right)}$$

$$\cos\delta = \frac{l^{``}}{a^{``}}$$

$$l^{``} = a^{``}\cos\delta$$

$$= a^{``}\cos\left(\arcsin\frac{r_2 - r_1}{a^{``}}\right)$$

$$= \sqrt{b^2 + c^2 - 2bc\cos\left(\beta + \theta^{``}\right)}\cos\left(\arcsin\frac{r_2 - r_1}{\sqrt{b^2 + c^2 - 2bc\cos\left(\beta + \theta^{``}\right)}}\right)$$

A length of the transmission belt 275 includes a sum of lengths of contact parts between the transmission belt 275, and the drive pulley 272, the driven pulley 273, and the tension pulley 2764, and lengths of parts in which the transmission belt 275 is tangent to the drive pulley 272, the driven pulley 273, and the tension pulley 2764. When the tension of the transmission belt 275 is adjusted, an adjustment angle of the drive pulley 272 is very small. Therefore, a magnitude of the adjustment angle (θ' or θ'') may be considered as equal to an adjusted radian (a radian change of the contact parts between the transmission belt 275, and the drive pulley 272, the driven pulley 273, and the tension pulley 2764). In addition, because the adjustment angle is very small, a length change of the parts in which the transmission belt 275 is tangent to the drive pulley 272 and the driven pulley 273 on a side opposite to the tension pulley 2764 may be considered as equal to a length change of parts in which the transmission belt 275 is tangent to the drive pulley 272 and the driven pulley 273 on a side corresponding to the tension pulley 2764.

It is assumed that when the drive pulley 272 rotates counterclockwise, a shortened length of the transmission belt 275 is $\Delta l_1$; when the drive pulley 272 rotates clockwise, an elongated length of the transmission belt 275 is $\Delta l_2$. In conclusion,

$$\Delta l_1 = 2(l - l`) + r\theta`$$
$$= 2(a\cos\delta - a`\cos\delta) + r\theta`$$
$$= 2(a - a`)\cos\delta + r\theta`$$
$$= 2\left(\sqrt{b^2 + c^2 - 2bc\cos\beta} - \sqrt{b^2 + c^2 - 2bc\cos(\beta - \theta`)}\right)\cos\left(\arcsin\frac{r_2 - r_1}{\sqrt{b^2 + c^2 - 2bc\cos\beta}}\right) + r\theta`$$

$$\Delta l_2 = 2(l` - l) + r\theta``$$
$$= 2(a``\cos\delta - a\cos\delta) + r\theta``$$
$$= 2(a`` - a)\cos\delta + r\theta``$$
$$= 2\left(\sqrt{b^2 + c^2 - 2bc\cos(\beta + \theta``)} - \sqrt{b^2 + c^2 - 2bc\cos\beta}\right)\cos\left(\arcsin\frac{r_2 - r_1}{\sqrt{b^2 + c^2 - 2bc\cos\beta}}\right) + r\theta``$$

In this case, the length of the transmission belt 275 may be adjusted by adjusting a position of the drive pulley 272. A larger length of the transmission belt 275 indicates greater tension of the transmission belt 275. The position of the drive pulley 272 is adjusted, to adjust the tension of the transmission belt 275, so that wear on the transmission belt 275 cannot be caused due to excessively large tension of the transmission belt 275, or noise and slipping cannot be caused due to excessively small tension.

Further, as shown in FIG. 18, when the motor 271 rotates by using the adjustment pin 276 as the center, the drive pulley 272 correspondingly rotates by using the tension pulley 2764 as the center. This can adjust the position of the drive pulley 272, adjust a length of $O_1O_2$ (that is, a distance between the drive pulley 272 and the driven pulley 273), and further adjust a distance between the center O of the tension pulley 2764 and $O_1O_2$. A larger length of $O_1O_2$ indicates a larger length of the transmission belt 275; a smaller distance between O and the $O_1O_2$ indicates a larger length of the transmission belt 275. When an outer circumferential surface of the tension pulley 2764 abuts against an outer circumferential surface of the transmission belt 275, the drive pulley 272 rotates clockwise/counterclockwise by using the tension pulley 2764 as the center, so that a length of $O_1O_2$ may be increased/decreased, and a distance between O and $O_1O_2$ may also be decreased/increased. In other words, the distance between $O_1O_2$ and the distance between O and $O_1O_2$ may be simultaneously adjusted, to increase an adjustment range of the tension of the transmission belt 275. Alternatively, the tension of the transmission belt 275 may be adjusted by adjusting a relatively small angle of the drive pulley 272, so that space required for adjusting the drive pulley 272 may be reduced, and a volume of the housing 25 may be reduced.

An embodiment of this application further provides a transmission apparatus adjustment method, to adjust tension of a transmission belt 275 in a transmission apparatus.

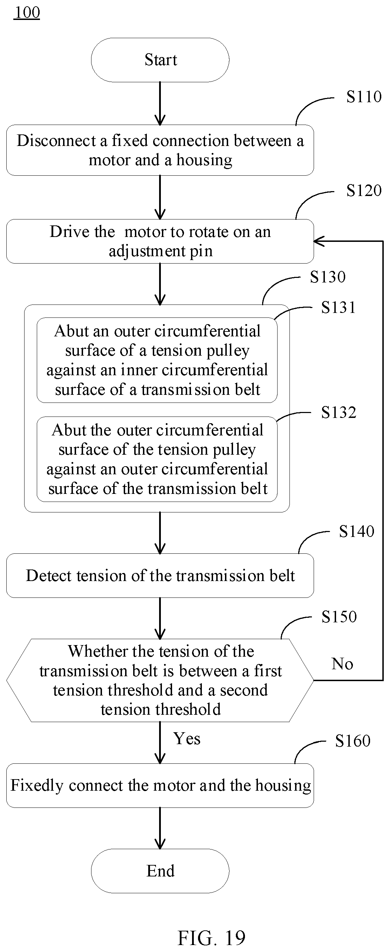

FIG. 19 is a schematic flowchart of a transmission apparatus adjustment method 100 according to an embodiment of this application. An REPS 27 is used as an example to describe a specific procedure of adjusting tension of a transmission belt 275. As shown in FIG. 19, a specific procedure of the transmission apparatus adjustment method 100 in this application includes the following steps.

Step S110: Disconnect a fixed connection between a motor 271 and a housing 25.

Step S120: Drive the motor 271 to rotate on an adjustment pin 276.

The adjustment pin 276 is mounted on the housing 25. The adjustment pin 276 is staggered with a drive shaft 2711 of the motor 271. A drive pulley 272 on the drive shaft 2711 is connected to a driven pulley 273 on the housing 25 by using a transmission belt 275. In this case, the motor 271 rotates on the adjustment pin 276, so that the drive shaft 2711 and the drive pulley 272 on the drive shaft 2711 rotate by using the adjustment pin 276 as a center. This can adjust a distance between the drive pulley 272 and the driven pulley 273, and further adjust tension of the transmission belt 275.

Step S130: Abut an outer circumferential surface of the tension pulley 2764 against the transmission belt 275.

The tension pulley 2764 is disposed on the adjustment pin 276, so that the outer circumferential surface of the tension pulley 2764 abuts against the transmission belt 275. This can change and extend a path through which the transmission belt 275 passes when connecting the drive pulley 272 and the driven pulley 273, change a length of the transmission belt 275, and adjust the tension of the transmission belt 275.

Further, step S130 may further include step S131 or step S132.

Step S131: Abut the outer circumferential surface of the tension pulley 2764 against an inner circumferential surface of the transmission belt 275.

This can change and extend the path through which the transmission belt 275 passes when connecting the drive pulley 272 and the driven pulley 273, change the length of the transmission belt 275, and adjust the tension of the transmission belt 275.

Step S132: Abut the outer circumferential surface of the tension pulley 2764 against an outer circumferential surface of the transmission belt 275.

In this case, the path in which the transmission belt 275 passes when connecting the drive pulley 272 and the driven pulley 273 may be changed by using the tension pulley 2764, so that a distance between the transmission belt 275 located on two sides of a part between the drive pulley 272 and the driven pulley 273 is shorter, and both a contact radian and a corresponding belt contact angle between the transmission belt 275 and both the drive pulley 272 and the driven pulley 273 are larger. This increases a contact area between the transmission belt 275 and both the drive pulley 272 and the driven pulley 273, improves a maximum static friction force between the transmission belt 275 and both the drive pulley 272 and the driven pulley 273, reduces a possibility of slipping between the transmission belt 275 and both the drive pulley 272 and the driven pulley 273, and reduces wear of the transmission belt 275. In addition, the motor 271 rotates relative to the housing 25, and the drive pulley 272 is adjusted away from/towards the driven pulley 273. In this case, when the transmission belt 275 is extended/shortened, the tension pulley 2764 correspondingly moves towards/far away from a connection line between a center of the drive pulley 272 and a center of the driven pulley 273, so that the tension pulley 2764 can tighten/loosen the transmission belt 275. This can increase an adjustment range of the tension of the transmission belt 275, reduce an angle at which the motor 271 needs to rotate when the tension of the transmission belt 275 is adjusted, and reduce space required for adjusting positions of the motor 271 and the drive pulley 272.

Step S140: Detect the tension of the transmission belt 275.

The tension of the transmission belt 275 is detected by using a detection device, to determine whether the tension of the transmission belt 275 is within a predetermined range.

Step S150: Determine whether the tension of the transmission belt is between a first tension threshold and a second tension threshold.

When the tension of the transmission belt 275 is less than the first tension threshold, the tension of the transmission belt 275 is excessively small, and slipping is likely to occur between the transmission belt 275 and both the drive pulley 272 and the driven pulley 273. This affects transmission efficiency and control precision, and causes relatively large noise when the transmission belt 275 operates. In this case, step S120 needs to be performed again, to re-adjust a position of the motor 271, so that the tension of the transmission belt 275 increases.

When the tension of the transmission belt 275 is greater than the second tension threshold, the tension of the transmission belt 275 is excessively large, and a friction force between the transmission belt 275 and both the drive pulley 272 and the driven pulley 273 is excessively large. This worsens wear of the transmission belt 275 and affects a service life of the transmission belt 275. In this case, step S120 needs to be performed again, to re-adjust a position of the motor 271, so that the tension of the transmission belt 275 decreases.

When the tension of the transmission belt 275 is greater than or equal to the first tension threshold, and less than or equal to the second tension threshold, the tension of the transmission belt 275 is within an appropriate range, so that a sufficient friction force can be generated between the transmission belt 275 and both the drive pulley 272 and the driven pulley 273. In this way, slipping or noise can be avoided, and wear on the transmission belt 275 caused by excessively large tension can be further avoided. In this case, the motor 271 may be fixedly connected to the housing 25.

Step S160: Fixedly connect the motor 271 and the housing 25.

The motor 271 may be fixedly connected to the housing 25 through bolt fastening, pressing fastening, clamping fastening, or the like, so that the transmission belt 275 can maintain adjusted tension for transmission.

An embodiment of this application further provides an air tightness detection method, to detect air tightness of both a second chamber 251 of a housing 25 and a first chamber 2712 of a motor 271. The motor 271 is connected to the housing 25 by using an adjustment pin 276. A through hole 2765 that connects the second chamber 251 and the first chamber 2712 is provided in the adjustment pin 276.

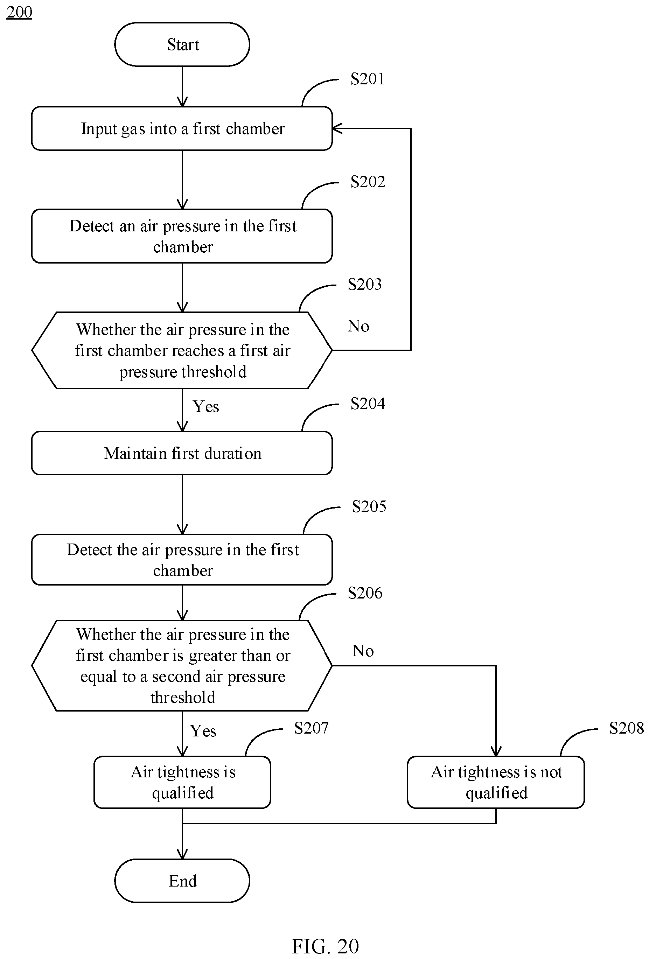

FIG. 20 is a schematic flowchart of an air tightness detection method 200 according to an embodiment of this application. As shown in FIG. 20, a specific procedure of the air tightness detection method 200 in this application includes the following steps.

Step S201: Input gas into the second chamber 251.

An air tightness detector may be connected to a housing 25 through a connection hole specially provided in the housing 25, or may be connected by using the steering rod 26 extending out of the housing 25. After the connection, the air tightness detector inputs gas into the second chamber 251, to increase an air pressure in the second chamber 251.

Step S202: Detect the air pressure in the second chamber 251.

The detecting the air pressure in the second chamber 251 may be detecting the air pressure in the second chamber 251 by using a barometer provided by the air tightness detector or another device, to determine whether the air pressure in the second chamber 251 reaches a first air pressure threshold. The first air pressure threshold may be an air pressure value corresponding to an air tightness level.

Step S203: Determine whether the air pressure in the second chamber 251 reaches the first air pressure threshold.

When it is detected that the air pressure in the second chamber 251 does not reach the first air pressure threshold, the air tightness detector is controlled to continue to input gas into the second chamber 251. When it is detected that the air pressure in the second chamber 251 reaches the first upper threshold, the air tightness detector is controlled to stop inputting gas into the second chamber 251.

Step S204: Maintain first duration.

The air tightness detector is controlled to keep both the second chamber 251 and the first chamber 2712 in a current status for the first duration. The first duration may be 5 minutes, 10 minutes, or another duration. If air tightness of both the second chamber 251 and the first chamber 2712 is qualified, gas in both the second chamber 251 and the first chamber 2712 does not leak or only a small amount of gas leaks. If air tightness of the second chamber 251 and the first chamber 2712 is not qualified, gas that exceeds a preset amount in both the second chamber 251 and the first chamber 2712 leaks.

Step S205: Detect the air pressure in the second chamber 251.

The air pressure in the second chamber 251 is detected by using the barometer provided by the air tightness detector or the another device, to determine whether the air pressure in the second chamber 251 is greater than or equal to a second air pressure threshold.

Step S206: Determine whether the air pressure in the second chamber 251 is greater than or equal to the second air pressure threshold.

When it is detected that the air pressure in the second chamber 251 is greater than or equal to the second air pressure threshold, it indicates that gas in both the second chamber 251 and the first chamber 2712 does not leak or only a small amount of gas leaks, and the air tightness of both the second chamber 251 and the first chamber 2712 is qualified. When it is detected that the air pressure in the second chamber 251 is less than the second air pressure threshold, it indicates that gas that exceeds the preset amount in both the second chamber 251 and the first chamber 2712 leaks, and air tightness of the second chamber 251 or air tightness of the first chamber 2712 is not qualified.

Step S207: When it is detected that the air pressure in the second chamber 251 is greater than or equal to the second air pressure threshold, the air tightness of both the second chamber 251 and the first chamber 2712 is qualified.

Step S208: When it is detected that the air pressure in the second chamber 251 is less than the second air pressure threshold, the air tightness of the second chamber 251 or the air tightness of the first chamber 2712 is not qualified.

In conclusion, because the second chamber 251 is connected to the first chamber 2712 through the through hole 2765, air tightness detection needs to be performed on only the second chamber 251, to determine whether the air tightness of both the second chamber 251 and the first chamber 2712 is qualified. Therefore, air tightness detection does not need to be performed on the motor 271. This can simplify a production process and improve production efficiency.

**Claims**

1. A transmission apparatus, comprising: a drive pulley (272), a driven pulley (273), and a transmission belt (275), wherein the drive pulley (272) is connected to the driven pulley (273) by using the transmission belt (275), and an axis (L1) of the drive pulley (272) is rotatable around a first axis (L2);

   an adjustment pin (276), wherein an axis (L2) of the adjustment pin (276) coincides with the first axis (L2); and
   **characterized by**
   a tension pulley (2764), wherein the tension pulley (2764) is disposed on the adjustment pin (276), and an outer circumferential surface of the tension pulley abuts against the transmission belt (275).

2. The apparatus according to claim 1, wherein the axis (L1) of the drive pulley (272), an axis (L3) of the driven pulley (273), the axis (L2) of the adjustment pin (276) are in parallel, and a relative position between the axis (L1) of the driven pulley (273) and the first axis (L2) remains unchanged.

3. The apparatus according to claim 1 or 2, wherein the apparatus further comprises a first motor and a housing (25), the first motor is configured to drive the drive pulley (272), and the first motor is mounted on the housing (25) by using the adjustment pin (276).

4.  The apparatus according to claim 3, wherein the first motor further comprises a first chamber (2712), the adjustment pin (276) further comprises a through hole (2765), a first end (2765a) of the through hole (2765) is located in the first chamber (2712), a second end (2765b) of the through hole (2765) is located outside the first motor, and the first chamber (2712) is connected to an outside of the first motor through the through hole (2765).

5.  The apparatus according to claim 4, wherein the housing (25) is enclosed to form a second chamber (251), and the drive pulley (272), the driven pulley (273), and the adjustment pin (276) are accommodated in the second chamber (251); and
    that the first chamber (2712) is connected to an outside of the first motor through the through hole (2765) specifically comprises:
    the first chamber (2712) is connected to the second chamber (251) through the through hole (2765).

6.  The apparatus according to claim 4 or 5, wherein an axis of the through hole (2765) coincides with the axis (L2) of the adjustment pin (276).

7.  The apparatus according to any one of claims 3 to 6, wherein the first motor further comprises a first fastening part (2714), and the first motor is fixedly connected to the housing (25) by using the first fastening part (2714).

8.  The apparatus according to claim 7, wherein that the first motor further comprises a first fastening part (2714) specifically comprises: the motor (271) comprises at least one bolt hole; and the first motor is relatively fastened to the housing (25) through a bolt connection.

9.  The apparatus according to any one of claims 3 to 8, wherein the apparatus further comprises a second motor, and the second motor and the first motor jointly drive the drive pulley (272).

10. The apparatus according to any one of claims 3 to 9, wherein the adjustment pin (276) further comprises a positioning end face (2763), and the positioning end face (2763) is configured to abut against the housing (25).

11. A transmission apparatus adjustment method (100), wherein the transmission apparatus is the apparatus according to any one of claims 1 to 10, and the method comprises:

    adjusting a rotation angle of a drive pulley (272) rotating around a first axis (L2); and
    when tension of a transmission belt (275) is greater than a first tension threshold, fixedly connecting (S160) a first motor to a housing (25).

12. The method according to claim 11, the method further comprises:
    disconnecting (S110) a fixed connection between the first motor and the housing (25).

13. A vehicle (2), wherein the vehicle (2) comprises the apparatus according to any one of claims 1 to 10.

**Patentansprüche**

1.  Getriebevorrichtung, umfassend: eine Antriebsscheibe (272), eine Abtriebsscheibe (273) und einen Treibriemen (275), wobei die Antriebsscheibe (272) unter Verwendung des Treibriemens (275) mit der Abtriebsscheibe (273) verbunden ist und eine Achse (L1) der Antriebsscheibe (272) um eine erste Achse (L2) drehbar ist;

    einen Einstellstift (276), wobei eine Achse (L2) des Einstellstifts (276) mit der ersten Achse (L2) zusammenfällt; und **gekennzeichnet durch**
    eine Spannscheibe (2764), wobei die Spannscheibe (2764) auf dem Einstellstift (276) angeordnet ist und eine Außenumfangsfläche der Spannscheibe an dem Treibriemen (275) anliegt.

2.  Vorrichtung nach Anspruch 1, wobei die Achse (L1) der Antriebsscheibe (272), eine Achse (L3) der Abtriebsscheibe (273) und die Achse (L2) des Einstellstifts (276) parallel sind und eine relative Position zwischen der Achse (L1) der Abtriebsscheibe (273) und der ersten Achse (L2) unverändert bleibt.

**3.** Vorrichtung nach Anspruch 1 oder 2, wobei die Vorrichtung ferner einen ersten Motor und ein Gehäuse (25) umfasst, der erste Motor dazu konfiguriert ist, die Antriebsscheibe (272) anzutreiben, und der erste Motor unter Verwendung des Einstellstifts (276) auf dem Gehäuse (25) montiert ist.

**4.** Vorrichtung nach Anspruch 3, wobei der erste Motor ferner eine erste Kammer (2712) umfasst, der Einstellstift (276) ferner ein Durchgangsloch (2765) umfasst, sich ein erstes Ende (2765a) des Durchgangslochs (2765) in der ersten Kammer (2712) befindet, sich ein zweites Ende (2765b) des Durchgangslochs (2765) außerhalb des ersten Motors befindet und die erste Kammer (2712) durch das Durchgangsloch (2765) hindurch mit einer Außenseite des ersten Motors verbunden ist.

**5.** Vorrichtung nach Anspruch 4, wobei das Gehäuse (25) umschlossen ist, um eine zweite Kammer (251) zu bilden, und die Antriebsscheibe (272), die Abtriebsscheibe (273) und der Einstellstift (276) in der zweiten Kammer (251) untergebracht sind; und
dass die erste Kammer (2712) durch das Durchgangsloch (2765) hindurch mit einer Außenseite des ersten Motors verbunden ist, speziell Folgendes umfasst:
die erste Kammer (2712) ist durch das Durchgangsloch (2765) hindurch mit der zweiten Kammer (251) verbunden.

**6.** Vorrichtung nach Anspruch 4 oder 5, wobei eine Achse des Durchgangslochs (2765) mit der Achse (L2) des Einstellstifts (276) zusammenfällt.

**7.** Vorrichtung nach einem der Ansprüche 3 bis 6, wobei der erste Motor ferner ein erstes Befestigungsteil (2714) umfasst und der erste Motor unter Verwendung des ersten Befestigungsteils (2714) fest mit dem Gehäuse (25) verbunden ist.

**8.** Vorrichtung nach Anspruch 7, wobei, dass der erste Motor ferner ein erstes Befestigungsteil (2714) umfasst, speziell Folgendes umfasst: der Motor (271) umfasst mindestens ein Bolzenloch; und der erste Motor ist durch eine Bolzenverbindung relativ an dem Gehäuse (25) befestigt.

**9.** Vorrichtung nach einem der Ansprüche 3 bis 8, wobei die Vorrichtung ferner einen zweiten Motor umfasst und der zweite Motor und der erste Motor die Antriebsscheibe (272) gemeinsam antreiben.

**10.** Vorrichtung nach einem der Ansprüche 3 bis 9, wobei der Einstellstift (276) ferner eine Positionierungsstirnfläche (2763) umfasst und die Positionierungsstirnfläche (2763) dazu konfiguriert ist, an dem Gehäuse (25) anzuliegen.

**11.** Getriebevorrichtungseinstellungsverfahren (100), wobei die Getriebevorrichtung die Vorrichtung nach einem der Ansprüche 1 bis 10 ist und das Verfahren Folgendes umfasst:

Einstellen eines Drehwinkels einer Antriebsscheibe (272), die sich um eine erste Achse (L2) dreht; und
wenn eine Spannung eines Treibriemens (275) größer als ein erster Spannungsschwellenwert ist, festes Verbinden (S160) eines ersten Motors mit einem Gehäuse (25).

**12.** Verfahren nach Anspruch 11, wobei das Verfahren ferner Folgendes umfasst:
Trennen (S110) einer festen Verbindung zwischen dem ersten Motor und dem Gehäuse (25).

**13.** Fahrzeug (2), wobei das Fahrzeug (2) die Vorrichtung nach einem der Ansprüche 1 bis 10 umfasst.

**Revendications**

**1.** Un appareil de transmission, comprenant : une poulie motrice (272), une poulie entraînée (273), et une courroie de transmission (275), où la poulie motrice (272) est connectée à la poulie entraînée (273) en utilisant la courroie de transmission (275), et un axe (L1) de la poulie motrice (272) pouvant pivoter autour d'un premier axe (L2) ;

un axe de réglage (276), où l'axe (L2) de l'axe de réglage (276) coïncide avec le premier axe (L2) ; et **caractérisé par**
une poulie de tension (2764), où la poulie de tension (2764) est disposée sur l'axe de réglage (276), et une surface extérieure de la poulie de tension venant en contact avec la courroie de transmission (275).

**2.** L'appareil conformément à la revendication 1, selon laquelle l'axe (L1) de la poulie motrice (272), un axe (L3) de la poulie entraînée (273), l'axe (L2) de l'axe de réglage (276) sont parallèles, et une position relative entre l'axe (L1) de la poulie entraînée (273) et le premier axe (L2) reste inchangée.

**3.** L'appareil conformément à la revendication 1 ou 2, selon laquelle l'appareil comprend également un premier moteur et un boîtier (25), le premier moteur étant configuré pour entraîner la poulie motrice (272), et le premier moteur étant monté sur le boîtier (25) en utilisant l'axe de réglage (276).

**4.** L'appareil conformément à la revendication 3, selon laquelle le premier moteur comprend également une première chambre (2712), l'axe de réglage (276) comprenant également un trou traversant (2765), une première extrémité (2765a) du trou traversant (2765) étant située dans la première chambre (2712), une seconde extrémité (2765b) du trou traversant (2765) étant située à l'extérieur du premier moteur, et la première chambre (2712) étant connectée à l'extérieur du premier moteur par le trou traversant (2765).

**5.** L'appareil conformément à la revendication 4, selon laquelle le boîtier (25) est fermé pour former une seconde chambre (251), et la poulie motrice (272), la poulie entraînée (273), et l'axe de réglage (276) sont agencés dans la seconde chambre (251) ; et
que la première chambre (2712) est connectée à l'extérieur du premier moteur par le trou traversant (2765) comprend spécifiquement :
la première chambre (2712) est connectée à la seconde chambre (251) par le trou traversant (2765).

**6.** L'appareil conformément à la revendication 4 ou 5, selon laquelle un axe du trou traversant (2765) coïncide avec l'axe (L2) de l'axe de réglage (276).

**7.** L'appareil conformément à l'une quelconque des revendications 3 à 6, selon laquelle le premier moteur comprend également une première pièce de fixation (2714), et le premier moteur est fixé de manière permanente au boîtier (25) par utilisation de la première pièce de fixation (2714).

**8.** L'appareil conformément à la revendication 7, selon laquelle le premier moteur comprend également une première pièce de fixation (2714), qui comprend spécifiquement : le moteur (271) comprenant au moins un trou de vis ; et le premier moteur étant relativement fixé au boîtier (25) par une connexion par vis.

**9.** L'appareil conformément à l'une quelconque des revendications 3 à 8, selon laquelle l'appareil comprend également un second moteur, et le second moteur et le premier moteur entraînent conjointement la poulie motrice (272).

**10.** L'appareil conformément à l'une quelconque des revendications 3 à 9, selon laquelle l'axe de réglage (276) comprend également une face de positionnement (2763), et la face de positionnement (2763) est configurée pour venir en contact avec le boîtier (25).

**11.** Un procédé de réglage d'appareil de transmission (100), selon lequel l'appareil de transmission est l'appareil conformément à l'une quelconque des revendications 1 à 10, et le procédé comprend :

un ajustement de l'angle de rotation d'une poulie motrice (272) tournant autour d'un premier axe (L2) ; et
lorsque la tension d'une courroie de transmission (275) est supérieure à un premier seuil de tension, la connexion fixe (S160) d'un premier moteur au boîtier (25).

**12.** Le procédé conformément à la revendication 11, le procédé comprenant également :
la dissociation (S110) d'une connexion fixe entre le premier moteur et le boîtier (25).

**13.** Un véhicule (2), où le véhicule (2) comprend l'appareil conformément à l'une quelconque des revendications 1 à 10.

FIG. 1

FIG. 2

FIG. 3

FIG. 4

FIG. 5

FIG. 6

FIG. 7

FIG. 8

271

2711

25

275

272

2764

276

27

26

274

273

FIG. 9

276

2761

2765

2763

2762

2764

2765a

2765b

FIG. 10

276

2761          2765          2763          2762

2765a          2764          2765b

FIG. 11

271

2715

2714          2713

2715

276

2715

FIG. 12

FIG. 13

FIG. 14

FIG. 15

FIG. 16

FIG. 17

FIG. 18

100

```
                    ┌──────────────┐
                    │    Start     │
                    └──────┬───────┘
                           │              ⌒ S110
                           ▼
        ┌──────────────────────────────────────┐
        │ Disconnect a fixed connection between a │
        │          motor and a housing            │
        └──────────────────┬───────────────────┘
                           │              ⌒ S120
                           ▼
        ┌──────────────────────────────────────┐
        │     Drive the  motor to rotate on an    │◄─────┐
        │          adjustment pin                 │      │
        └──────────────────┬───────────────────┘      │
                           │         ⌒ S130            │
                           ▼          ⌒ S131           │
    ┌──────────────────────────────────────────┐      │
    │  ┌────────────────────────────────────┐  │      │
    │  │     Abut an outer circumferential    │  │      │
    │  │      surface of a tension pulley     │  │      │
    │  │  against an inner circumferential    │  │      │
    │  │  surface of a transmission belt      │  │      │
    │  └────────────────────────────────────┘  │ ⌒ S132 │
    │  ┌────────────────────────────────────┐  │      │
    │  │    Abut the outer circumferential    │  │      │
    │  │    surface of the tension pulley     │  │      │
    │  │  against an outer circumferential    │  │      │
    │  │  surface of the transmission belt    │  │      │
    │  └────────────────────────────────────┘  │      │
    └──────────────────┬───────────────────────┘      │
                           │              ⌒ S140        │
                           ▼                            │
        ┌──────────────────────────────────────┐      │
        │    Detect tension of the transmission belt │  │
        └──────────────────┬───────────────────┘      │
                           │              ⌒ S150        │
                           ▼                   No       │
        ╱──────────────────────────────────────╲──────┘
        │     Whether the tension of the          │
        │  transmission belt is between a first   │
        │   tension threshold and a second        │
        │         tension threshold               │
        ╲──────────────────┬───────────────────╱
                           │ Yes    ⌒ S160
                           ▼
        ┌──────────────────────────────────────┐
        │  Fixedly connect the motor and the housing │
        └──────────────────┬───────────────────┘
                           │
                           ▼
                    ┌──────────────┐
                    │     End      │
                    └──────────────┘
```

FIG. 19

200

```
                          ┌─────────────┐
                          │    Start    │
                          └─────────────┘
                                 │
                                 ▼
                  ┌──────────────────────────────┐         S201
                  │   Input gas into a first     │◄──┐
                  │          chamber             │   │
                  └──────────────────────────────┘   │
                                 │                    │
                                 ▼                    │
                  ┌──────────────────────────────┐   │     S202
                  │  Detect an air pressure in   │   │
                  │      the first chamber       │   │
                  └──────────────────────────────┘   │
                                 │                    │
                                 ▼                    │
               ╱──────────────────────────────╲  No  │     S203
              ╱  Whether the air pressure in    ╲─────┘
              ╲  first chamber reaches a first  ╱
               ╲      pressure threshold       ╱
                ╲─────────────────────────────╱
                             │ Yes
                             ▼                           S204
                  ┌──────────────────────────────┐
                  │     Maintain first duration  │
                  └──────────────────────────────┘
                             │
                             ▼                           S205
                  ┌──────────────────────────────┐
                  │  Detect the air pressure in  │
                  │       the first chamber      │
                  └──────────────────────────────┘
                             │
                             ▼                           S206
               ╱──────────────────────────────╲   No
              ╱  Whether the air pressure in    ╲──────────────┐
              ╲  first chamber is greater than   ╱              │
               ╲ or equal to a second air       ╱               │
                ╲      pressure threshold       ╱                │
                 ╲────────────────────────────╱                 │
                          │ Yes        S207                      │  S208
                          ▼                                      ▼
               ┌────────────────────┐         ┌────────────────────┐
               │  Air tightness is  │         │ Air tightness is not│
               │     qualified      │         │     qualified      │
               └────────────────────┘         └────────────────────┘
                          │                              │
                          ▼◄─────────────────────────────┘
                  ┌─────────────┐
                  │     End     │
                  └─────────────┘
```

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1792804 A1